# EUROPÄISCHE PATENTSCHRIFT

(11) **EP 1 171 340 B1**
(45) Veröffentlichungstag und Bekanntmachung des Hinweises auf die Patenterteilung: **07.05.2003**
(21) Anmeldenummer: 00916941.8
(22) Anmeldetag: 14.03.2000
(51) Int. Cl.: B62D 25/08

(54) **TRAGSTRUKTUR FÜR KRAFTWAGEN**
SUPPORTING STRUCTURE FOR A MOTOR VEHICLE
STRUCTURE DE SUPPORT POUR UN VEHICULE A MOTEUR

(30) Priorität: 16.04.1999 DE 19917177
(43) Veröffentlichungstag der Anmeldung: 16.01.2002
(73) Patentinhaber: DaimlerChrysler AG, 70567 Stuttgart (DE)
(72) Erfinder: BARTESCH, Hans-Georg, D-71032 Böblingen (DE); BAUMANN, Karl-Heinz, D-71149 Bondorf (DE); BRUHNKE, Ulrich, D-71139 Ehningen (DE); JUSTEN, Rainer, D-71069 Sindelfingen (DE); KOHLER, Jürgen, D-71134 Aidlingen (DE)
(86) Internationale Anmeldenummer: EP0002246
(87) Internationale Veröffentlichungsnummer: WO00063061

(56) Entgegenhaltungen:
- EP-A- 0 255 749
- DE-A- 19 711 273
- GB-A- 2 089 464
- GB-A- 2 114 068
- US-A- 5 819 408

## Beschreibung

Die Erfindung betrifft eine Tragstruktur für Kraftwagen nach dem Oberbegriff des Patentanspruchs 1.

Eine solche, der EP 0 255 749 B1 entnehmbare Tragstruktur für Kraftwagen umfaßt einen Boden in Sandwichbauweise, der einteilig mit einer vorderen Stirnwand ausgebildet ist. Vor der Stirnwand ist eine etwa U-förmige Vorbaustruktur befestigt, die ebenfalls in Sandwichbauweise gefertigt ist. An dem Boden sind seitlich Säulen befestigbar, die eine Dachkonstruktion tragen. Erst durch die Ergänzung des Bodens mit dieser Dachkonstruktion entsteht eine ausreichend steife Sicherheitsfahrgastzelle. Somit wird bei einem Frontalaufprall des Kraftwagens zunächst die Vorbaustruktur zur Absorption von Aufprallenergie herangezogen, bevor es zu Beschädigungen der Sicherheitsfahrgastzelle kommt. Für Kraftwagen mit offenem Aufbau wie Roadster oder Cabriolets ist die bekannte Tragstruktur weniger geeignet.

Aus der US-A-5 819 408 ist ein Chassis für einen Kraftwagen zu entnehmen, welches aus einer Vielzahl hintereinander angeordneter, in Fahrzeugquerrichtung verlaufender Wabenschichtelemente in Kombination mit Stabwerkträgern gebildet ist. Die einzelnen Wabenschichtelemente bestehen jeweils aus einem Grundblech, aus dem eine Vielzahl napfartiger Waben tiefgezogen werden. Zur Herstellung des Chassis werden die in Fahrzeuglängsrichtung hintereinander gereihten Wabenschichtelemente zusammengesteckt und durch ein Schweißverfahren miteinander verbunden, wonach die Hohlräume zwischen den napfartigen Waben durch einen Kunststoff ausgefüllt werden. Anschließend werden auf die die Außenseiten des Chassis bildenden Schmalseiten der Wabenschichtelemente Deckschichten aufgeklebt. Insgesamt entsteht dadurch eine sehr aufwendig herzustellendes Chassis, dessen einzelne Wandabschnitte erst durch das Zusammensetzen und Fügen der einzelnen Wabenschichtelemente entstehen. Da die Wabenschichtelemente den ihnen zugeordneten Querschnitt des Chassis repräsentieren, sind sie entsprechend komplex gestaltet. Das zusammengesetzte Chassis umfaßt einen in Fahrzeuglängsrichtung verlaufenden, hohlen Mittelkörper sowie einen Boden, welche sich jeweils bis an das vordere Ende des Chassis erstrecken. Eine Unterteilung des Chassis in eine Sicherheitsfahrgastzelle und eine vor dieser angeordnete, sich im Bereich der Stirnwand abstützende Vorbaustruktur ist demnach nicht gegeben. Somit ist auch eine unfallbedingte Deformationsreihenfolge, bei der zunächst die Vorbaustruktur kollabiert und erst darauf folgend die Sicherheitsfahrgastzelle verformt wird, nicht erkennbar oder jedenfalls äußerst schwierig zu verwirklichen.

Aufgabe der Erfindung ist es, eine Tragstruktur für Kraftwagen der im Oberbegriff des Patentanspruchs 1 angegebenen Art zu schaffen, die bei Aufrechterhaltung eines guten Crashverhaltens bereits ohne Dachkonstruktion hinreichend stabil ausgebildet werden kann.

Diese Aufgabe wird erfindungsgemäß durch eine Tragstruktur mit den Merkmalen des Patentanspruchs 1 gelöst. Vorteilhafte Ausgestaltungen der erfindungsgemäßen Tragstruktur sind in den Unteransprüchen angegeben.

Bei der Tragstruktur nach der Erfindung ist durch den Stützkasten eine verbesserte Abstützung der Vorbaustruktur am Boden der Tragstruktur geschaffen, so daß z.B. bei einem Frontalcrash eine erwünschte Deformationsreihenfolge erreicht wird, bei der die Vorbaustruktur in besonders guter Weise als energieabsorbierende Knautschzone wirkt und die Sicherheitsfahrgastzelle mit dem Boden weitestgehend in seiner Form erhalten bleibt. Die Tragstruktur ist durch seine stabile Ausgestaltung insbesondere für Fahrzeuge mit unterschiedlichem Aufbau verwendbar. Zudem können durch die Leichtbauplatten des Stützkastens Tragaufgaben für in diesem Bereich angeordneten Bauteile wahrgenommen werden. Beispielsweise kann die obere Leichtbauplatte des Stützkastens die Funktion eines Trägers unter der Instrumententafel sowie des Querträgers unter dem Windlauf übernehmen.

Eine sich annähernd über die gesamte Breite des Bodens erstrekkende Stirnwand kann dabei durch die einfache Geometrie kostengünstig gefertigt und gut an den Seitenwänden befestigt werden. Ist ein Übergangsbereich der Stirnwand ausgehend vom Boden schräg nach vorn oben gerichtet, so ist bei einem Frontalaufprall sowohl für den Motor als auch für die Vorderräder eine Abgleitfläche geschaffen, mit der übermäßige Stirnwand intrusionen vermieden werden können.

Zwei Längsträger mit abgewinkelten Querschnitt ermöglichen eine steife Ausgestaltung der Vorbaustruktur, die besonders gut an dem Stützkasten befestigt ist, wenn die hinteren Enden der vertikalen Plattenschenkel über die annähernd gesamte Höhe abstützt sind. Erstrecken sich die vertikalen Plattenschenkel zumindest über die halbe Höhe der Stirnwand, so kann auf zuverlässige Weise ein Überfahren der Längsträger bei einer Frontalkollision vermieden werden. Ein besonders einfacher und kostengünstig herstellbarer Längsträger ist geschaffen, wenn jeweils ein quer verlaufender Plattenschenkel über etwa einem rechten Winkel mit dem zugehörigen vertikalen Plattenschenkel verbunden ist. Insgesamt ergeben die Längsträger durch ihre Form und Anordnung einen besonders guten Schutz z.B. bei einem Frontalaufprall mit geringer Breitenüberdeckung der beteiligten Fahr zeuge.

Durch die Befestigung eines Frontmoduls am vorderen Ende der Längsträger wird mit den Längsträgern und dem Stützkasten ein kastenförmiges, die Vorbaustruktur aussteifendes Gebilde geschaffen, insbesondere wenn das Frontmodul eine Rahmenkonstruktion mit einem oberen und unteren Querträger umfaßt.

Ist die Hecktrennwand schräg nach hinten oben geneigt, so ist bei einem Heckaufprall für die Hinterräder und ggf. für einen Heckmotor eine Abgleitfläche geschaffen, mit der übermäßige Wandintrusionen vermieden werden können.

In weiter Ausgestaltung der Tragstruktur gemäß den Ansprüchen 21 bis 25 ergeben sich der Vorbaustruktur entsprechende Vorteile auch für die Heckstruktur.

Durch die Befestigung einer Rückwand am hinteren Ende der hinteren Längsträger wird ein die Heckstruktur aussteifendes, kastenförmiges Gebilde geschaffen, das durch eine Plattenanordnung aus Leichtbauplatten besonders versteift ist.

Ist in weiterer Ausgestaltung der Erfindung zwischen der Stirnwand und der Hecktrennwand ein am Boden befestigter Tunnel vorgesehen, so ist der Boden besonders steif ausgebildet. Zudem können an der Vorbaustruktur oder Heckstruktur auftretende Kräfte besonders gut an die gesamte Tragstruktur verteilt werden.

Durch eine Türinnenschale in Leichtbauweise ergibt sich eine stabile Türe, die durch die weitgehend parallele Anordnung zur Seitenwand leicht gegenüber der Tragstruktur abgedichtet werden kann.

Sehr schnell und entsprechend kostengünstig lassen sich Leichtbauplatten durch Strangpressen von Leichtmetall-Legierungen z.B. aus Aluminium fertigen. Hierbei kann es zur Schall- und Wärmedämmung zweckmäßig sein, die Hohlkammern der Leichtbauplatten nach dem Ablängen auszuschäumen.

Da die Tragstruktur aus im wesentlichen ebenen Platten zusammengesetzt werden kann, die leicht aber außerordentlich steif sind, werden im Unterschied zur üblichen Schalenbauweise aus tiefgezogenen Blechen keine großformatigen Formen benötigt. Somit lassen sich auch bereits Fahrzeugbaureihen mit kleineren Stückzahlen wirtschaftlich fertigen, zumal Anbauteile zur Verkleidung der Tragstruktur insbesondere aus Kunststoff schnell und kostengünstig hergestellt werden können. Dabei können standardisierte Tragstrukturen realisiert werden, die unverändert für unterschiedliche Fahrzeugkonzepte geeignet sind.

Durch die an der Tragstruktur befestigten Aufnahmen, mit denen Säulen einer Dachkonstruktion befestigbar sind, wird eine sehr steife Verbindung der Tragstruktur mit der Dachkonstruktion erzielt. Außerdem dienen die Aufnahmen als Abstützung für die Türscharniere.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig.1a,b: jeweils in Perspektivansicht von schräg vorne bzw. von der Seite eine Tragstruktur eines Kraftwagens nach einer ersten Ausführungsform der Erfindung;
- Fig.2: in Perspektivansicht von schräg hinten die erfindungsgemäße Tragstruktur nach Fig.1;
- Fig.3: eine perspektivische Unteransicht auf die Tragstruktur nach Fig.1;
- Fig.4a,b: eine Perspektivansicht von schräg vorne und eine Seitenansicht auf die teilweise mit Verkleidungsteilen beplankte Tragstruktur nach Fig.1;
- Fig.5a,b: jeweils eine Perspektivansicht von schräg vorne auf die mit seitlichen Aufnahmen und einer Rammschutzeinrichtung versehenen Tragstruktur nach Fig.1;
- Fig.6: in Perspektivansicht von schräg vorne eine Tragstruktur eines Kraftwagens nach einer zweiten Ausführungsform der Erfindung;
- Fig.7: eine Perspektivansicht von schräg vorne oben auf die teilweise mit Verkleidungsteilen beplankte Tragstruktur nach Fig.6, an der eine Dachkonstruktion befestigt ist.

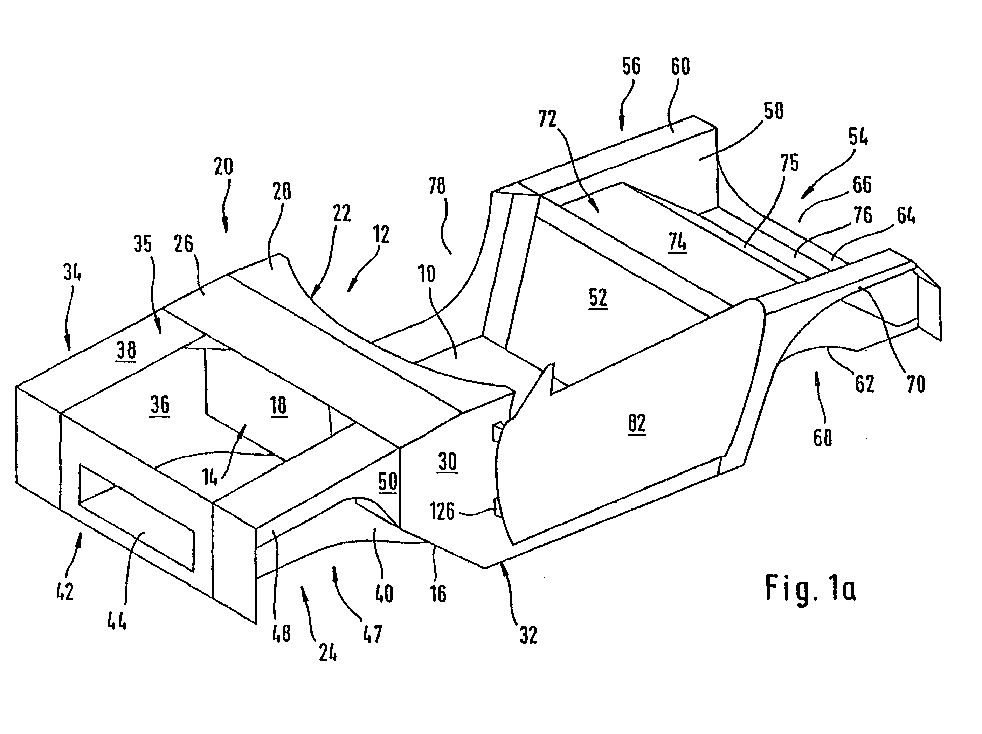

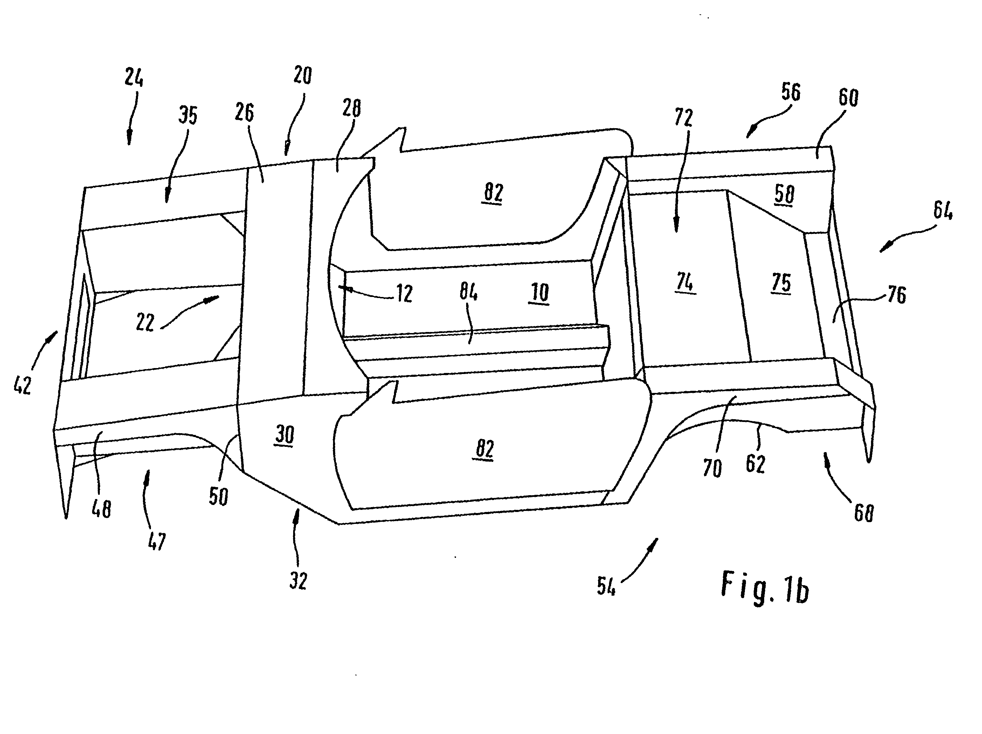

In Fig.1a und 1b sind in Perspektivansicht von schräg vorne bzw. von der Seite eine Tragstruktur eines Kraftwagens dargestellt, die einen tragenden Boden 10 in Leichtbauweise umfaßt. Vorn im Fußraumbereich 12 geht der Boden 10 in eine Stirnwand in Leichtbauweise 14 über, die einen an den Boden anschließenden, schräg nach vorn oben gerichteten Übergangsbereich 16 und einen davon oberhalb angeordneten, etwa vertikalen Bereich 18 umfaßt. Die Stirnwand 14 erstreckt sich hier über die gesamte Breite des Bodens 10. Seitlich und oben ist der Fußraumbereich 12 von einer Plattenanordnung 20 in Leichtbauweise begrenzt, die gemeinsam mit dem Boden 10 und der Stirnwand 14 einen Stützkasten 22 für eine Vorbaustruktur 24 bilden. Dabei umfaßt die Plattenanordnung 20 eine vordere und eine hintere obere Leichtbauplatte 26,28, die den Fußraumbereich 12 nach oben begrenzen. Die hintere obere Leichtbauplatte 28 ist etwa horizontal angeordnet und erstreckt sich bis zu einer nicht dargestellten Instrumententafel nach hinten; die vordere obere Leichtbauplatte 26 ist etwas nach vorne unten geneigt und erstreckt sich unterhalb eines ebenfalls nicht gezeigten Windlaufes bis zu dem vertikalen Bereich 18 der Stirnwand 14 nach vorne. Weiter umfaßt die Plattenanordnung 20 seitliche Stützkastenwände 30, die den Fußraumbereich 12 seitlich begrenzen und jeweils einen Wandbereich einer Seitenwand 32 der Tragstruktur bilden, die nachfolgend noch näher erläutert werden wird. Insgesamt bilden die vordere Stirnwand 14, der Boden 10, die beiden seitlichen Stützkastenwände 30 sowie die beiden oberen Leichtbauplatten 26,28 den steifen Stützkasten 22, an dem die Vorbaustruktur 24 befestigt ist. Dabei können der Boden 10, der Übergangsbereich 16 und der obere Bereich 18 der Stirnwand 14 sowie die oberen Leichtbauplatten 26,28 entweder aus einer einteiligen, entsprechend abgewinkelten Platte oder aus mehreren Platten bestehen, die entsprechend aneinander gefügt sind. Die seitlichen Stützkastenwände 30 können mit z.B. der Stirnwand 14, dem Boden 10 oder einer der oberen Leichtbauplatten 26,28 ebenfalls einteilig ausgebildet und entsprechend abgewinkelt sein oder aus separaten Bauteilen bestehen, die am zugeordneten seitlichen Ende des Stützkastens 22 befestigt sind.

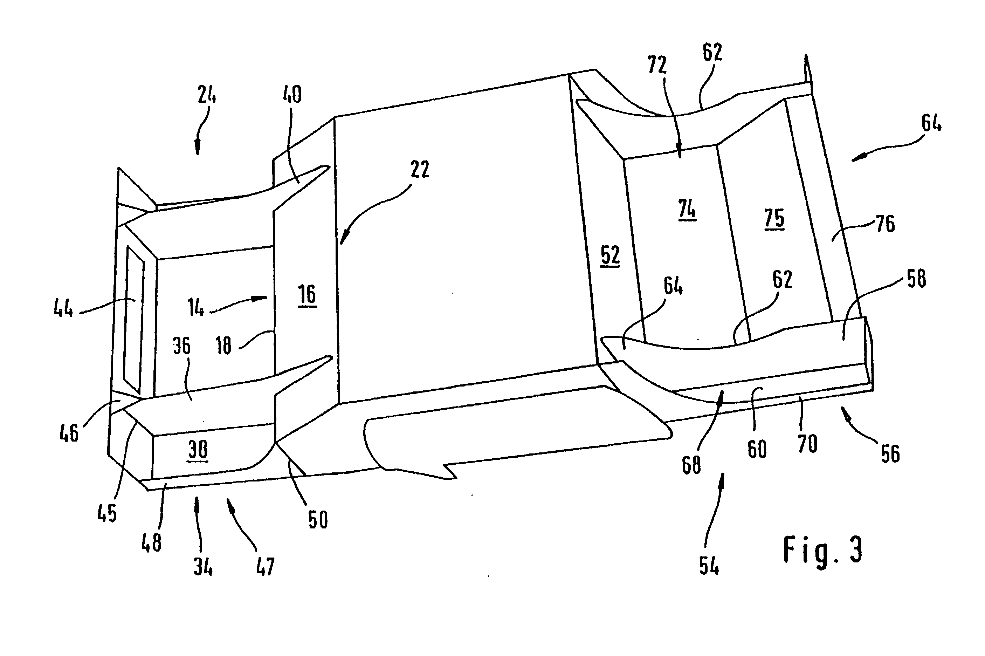

Wie insbesondere in Zusammenschau mit Fig.3 erkennbar, in der die Tragstruktur in einer Perspektivansicht von unten dargestellt ist, ist die Vorbaustruktur 24 im Bereich der Stirnwand 14 an dem Stützkasten 22 abgestützt. Die Vorbaustruktur 24 umfaßt zwei vordere Längsträger 34 in Leichtbauweise, die jeweils einen abgewinkelten Querschnitt mit einem etwa vertikalen Plattenschenkel 36 und einem quer dazu verlaufenden Plattenschenkel 38 aufweisen. Die einander zugeordneten beiden Plattenschenkel 36,38 können dabei sowohl einteilig abgewinkelt als auch mehrteilig ausgebildet und entsprechend aneinander gefügt sein. Die vertikalen Plattenschenkel 36 sind gegenüber der zugeordneten seitlichen Stützkastenwand 30 in Richtung der Längsmittenebene und etwa parallel zu dieser verlaufend nach innen versetzt angeordnet und erstrecken sich in Fahrzeughochrichtung hier über etwa zwei Drittel der Höhe der Stirnwand 14. Dabei weisen die vertikalen Plattenschenkel 36 über einen Großteil ihres Längenverlauf eine annähernd konstante Höhe auf. Im Bereich ihrer hinteren Enden sind die vertikalen Plattenschenkel 36 über die annähernd gesamte Höhe der Stirnwand 14 an dem Stützkasten 22 abgestützt. Um diese möglichst großflächige Abstützung der Vorbaustruktur 24 am Stützkasten 22 zu schaffen, sind die vertikalen Plattenschenkel 36 sowohl am vertikalen oberen Bereich 18 als auch am unteren Übergangsbereich 16 befestigt. Zur Befestigung am Übergangsbereich 16 weisen die vertikalen Plattenschenkel 36 schräg nach hinten unten abragende keilförmige Fortsätze 40 auf. Der jeweils quer verlaufende Plattenschenkel 38 ragt über etwa einem rechten Winkel seitlich vom zugehörigen vertikalen Plattenschenkel 36 nach außen ab und erstreckt sich bis zu der zugeordneten Seitenwand 32. Die quer verlaufenden Plattenschenkel 38 schließen mit ihren hinteren Enden etwa auf Höhe der vorderen oberen Leichtbauplatte 26 an diese an. Dabei können die beiden oberen Leichtbauplatten 26,28 und die quer verlaufenden Plattenschenkel 38 sowohl mehrteilig ausgebildet und aneinander gefügt als auch aus einer einstückigen, entsprechend abgewinkelten Leichtbauplatte geformt sein. Die Oberseite 35 bzw. die quer verlaufenden Plattenschenkel 28 der vorderen Längsträger 34 sind über ihre Länge nach vorn unten geneigt, wobei diese Neigung vorzugsweise der Neigung der vorderen oberen Leichtbauplatte 26 des Stützkastens 22 entspricht.

Am vorderen Ende der Längsträger 34 ist ein Frontmodul 42 befestigt, das hier als Leichtbauplatte ausgebildet ist und in Fahrzeugquerrichtung sowie etwa vertikal verläuft. Diese Leichtbauplatte 42 ist in ihrer Höhe an die der vertikalen Plattenschenkel 36 und in ihrer Breite an die des Stützkastens 22 angepaßt. Die Leichtbauplatte 42 ist mit einer Durchgangsöffnung 44 versehen, die beispielsweise die Anordnung eines Kühlers ermöglicht. An der Unterseite der vertikalen Plattenschenkel 36 und des Frontmoduls 42 sind im Bereich von deren Fügestellen 45 dreieckförmige Verstärkungen 46 (Fig.3) befestigt, die insbesondere der Winkelversteifung der Fügestellen 45 dienen. Die Seitenwände 32 sind bis zu dem Frontmodul 42 nach vorne verlängert und mit jeweils einem Radausschnitt 47 versehen. Demgemäß ist die Seitenwand 32 über die überwiegende Länge des zugeordneten Längsträgers 34 als relativ schmaler Steg 48 ausgebildet, der am quer verlaufenden Plattenschenkel 38 des entsprechenden Längsträgers 34 unter etwa einem rechten Winkel sowie an dem Frontmodul 42 befestigt ist. Dabei wäre es auch denkbar, den schmalen Steg 48 einteilig mit dem quer verlaufenden Plattenschenkel 38 zu gestalten. Der schmale Steg 48 ist hier etwa ein viertel so breit wie der vertikale Plattenschenkel 36 des Längsträgers 34. Vor dem Stützkasten 22 erweitert sich der schmale Steg 48 in einem Anschlußbereich 50 bis auf die Breite des vorderen Endes der seitlichen Stützkastenwände 30. Der schmale Steg 48 kann sowohl einstückig mit der zugehörigen Seitenwand 32 und der seitlichen Stützkastenwand 30 als auch mehrteilig zusammengefügt ausgebildet sein. Insgesamt bilden der vertikale sowie der quer verlaufende Plattenschenkel 36,38, der schmale Steg 48, die Stirnwand 14 und die vordere Leichtbauplatte 42 einen vorderen Radkasten der Tragstruktur.

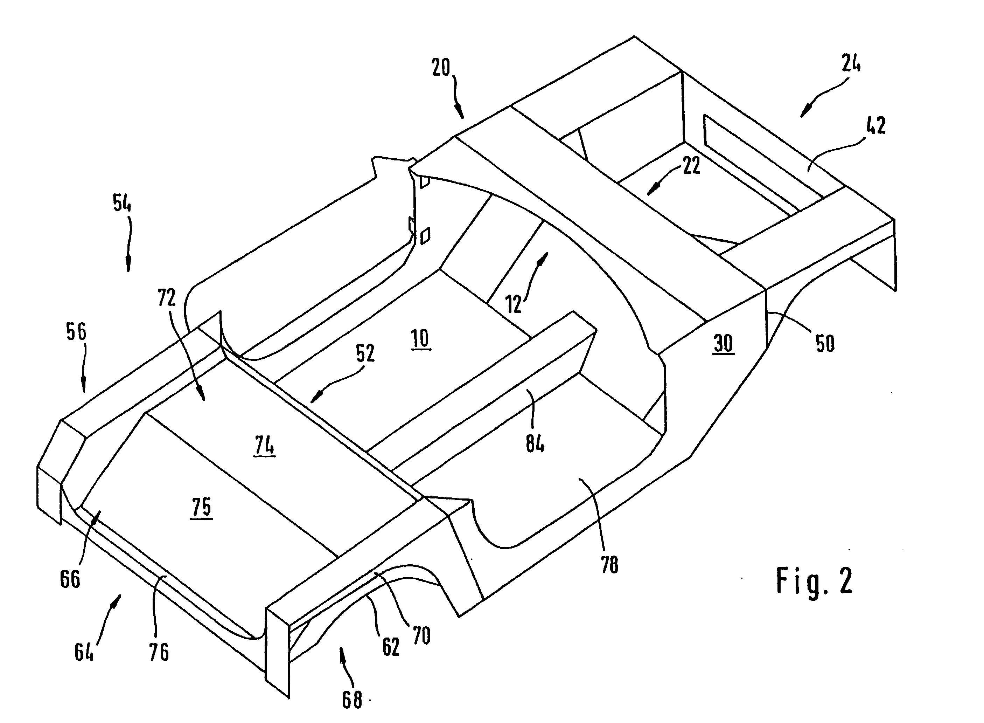

Insbesondere in Zusammenschau der Fig.2 und 3 ist erkennbar, daß der Boden 10 hinten in eine schräg nach hinten oben ragende Hecktrennwand 52 übergeht, die aus einer Leichtbauplatte gebildet ist. Dabei kann die Leichtbauplatte der Hecktrennwand 52 sowohl einteilig mit dem Boden 10 und gegenüber diesem abgewinkelt als auch als separate, mit dem Boden 10 fest verbundene ein- oder mehrteilige Platte ausgebildet sein. Die Hecktrennwand 52 erstreckt sich zwischen den Seitenwänden 32 annähernd über die gesamte Breite des Bodens 10.

Die Tragstruktur weist hinter der Hecktrennwand 52 eine Heckstruktur 54 mit hinteren Längsträgern 56 aus Leichtbauplatten auf, die jeweils einen in Fahrzeughochrichtung und einen in Fahrzeuglängsrichtung abgewinkelten Plattenschenkel 58,60 aufweisen. Die einander zugeordneten beiden Plattenschenkel 58,60 können dabei sowohl einteilig abgewinkelt als auch mehrteilig ausgebildet und entsprechend aneinander gefügt sein. Die vertikalen Plattenschenkel 58 sind gegenüber der zugeordneten Seitenwand 32 in Richtung der Längsmittenebene und etwa parallel zu dieser verlaufend nach innen versetzt angeordnet und erstrecken sich in Fahrzeughochrichtung hier über etwa zwei Drittel der Höhe der Hecktrennwand 52. Dabei weisen die vertikalen Plattenschenkel 58 über einen Großteil ihres Längenverlaufs eine annähernd konstante Höhe auf. Im Bereich einer nicht gezeigten Hinterachse sind die vertikalen Plattenschenkel 58 mit einem inneren Radausschnitt 62 versehen. Um eine möglichst großflächige Abstützung der Heckstruktur 54 an der Hecktrennwand 52 zu schaffen, haben die vertikalen Plattenschenkel 58 an ihrem jeweils vorderen Ende ausgehend von den inneren Radausschnitten 62 schräg nach vorne unten abragende keilförmige Fortsätze 64 (Fig.3). Der quer verlaufende Plattenschenkel 60 ragt über etwa einem rechten Winkel seitlich vom zugehörigen vertikalen Plattenschenkel 58 nach außen ab und erstreckt sich bis zu der zugeordneten Seitenwand 32. Die quer verlaufenden Plattenschenkel 60 schließen mit ihren vorderen Enden etwa auf Höhe des oberen Endes der Hecktrennwand 52 an diese an und erstrecken sich in Fahrzeuglängsrichtung etwa horizontal.

Am hinteren Ende der hinteren Längsträger 56 ist ein Heckmodul 64 befestigt, das hier als Rückwand in Leichtbauweise ausgebildet ist und in Fahrzeugquerrichtung sowie etwa vertikal verläuft. Sie ist in ihrer Höhe an die der vertikalen Plattenschenkel 58 und in ihrer Breite an die Hecktrennwand 52 angepaßt. In der Rückwand 64 ist ein Ausschnitt 66 für eine hier als Kofferraumdeckel ausgebildete Rückwandtür ausgespart. Die Seitenwände 32 sind bis zu der Rückwand 64 nach hinten verlängert und mit jeweils einem Radausschnitt 68 versehen. Demgemäß ist die Seitenwand 32 über die überwiegende Länge des zugeordneten hinteren Längsträgers 56 als relativ schmaler hinteren Steg 70 ausgebildet, der an dem quer verlaufenden Plattenschenkel 60 des entsprechenden Längsträgers 56 unter etwa einem rechten Winkel sowie an der Rückwand 64 befestigt ist. Dabei wäre es auch denkbar, den schmalen hinteren Steg 70 einteilig mit dem quer verlaufenden Plattenschenkel 60 zu gestalten. Auch kann der schmale Steg 70 sowohl einstückig als auch mehrteilig zusammengefügt mit der zugehörigen Seitenwand 32 ausgebildet sein. Der schmale hintere Steg 70 ist hier etwa viertel so breit wie der vertikale Plattenschenkel 58 des hinteren Längsträgers 56. Insgesamt bilden der vertikale sowie der quer verlaufende Plattenschenkel 58,60, der schmale Steg 70, die Hecktrennwand 52 und die Rückwand 64 einen hinteren Radkasten der Tragstruktur.

Die vertikalen Plattenschenkel 58 der hinteren Längsträger 56 sind über eine Plattenanordnung 72 aus Leichtbauplatten fest miteinander zu einem Kasten verbunden, die einen etwa horizontalen Plattenabschnitt 74 und einen daran anschließenden, schräg nach hinten unten verlaufenden Plattenabschnitt 75. Zwischen dem schräg verlaufenden Plattenabschnitt 75 und der Hecktrennwand 52 ist ein weiterer, horizontal verlaufender schmaler Plattenabschnitt 76 angeordnet. Die einzelnen Abschnitte 74-76 sowie die Hecktrennwand 52 und die Rückwand 64 können sowohl aus einem abgewinkelten als auch aus mehreren zusammengefügten Platten gefertigt sein. Der horizontale, an die Hecktrennwand 52 anschließende Plattenabschnitt 74 verläuft in einem Abstand unterhalb der quer verlaufenden Plattenschenkel 60 der hinteren Längsträger 56, wobei die Hecktrennwand 52 mit ihrem oberen Ende entweder auf Höhe des horizontalen Plattenabschnitts 74 oder der Höhe der quer verlaufenden Plattenschenkel 60 endet.

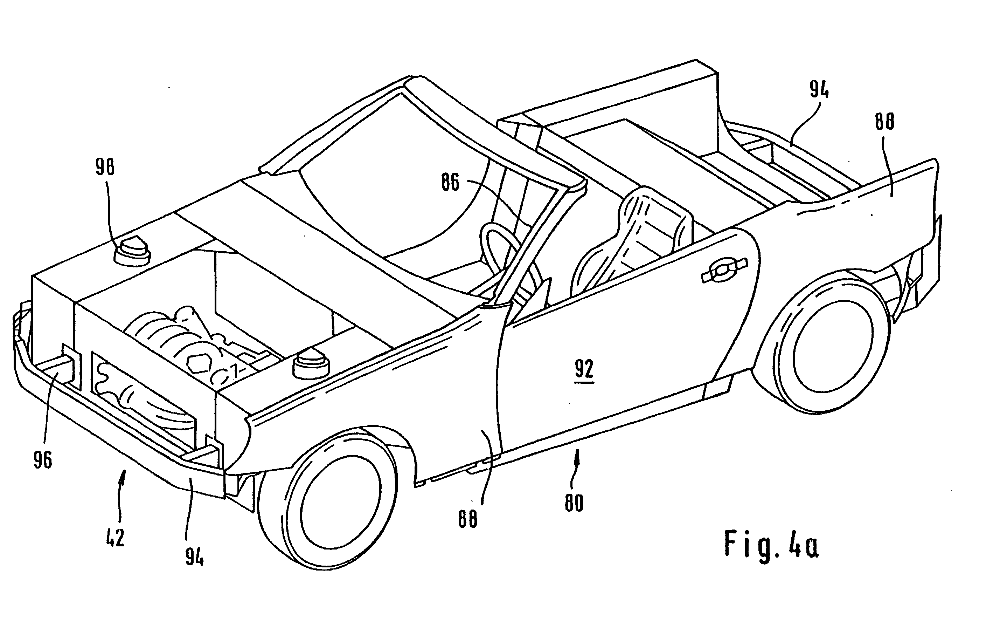

Die Seitenwand 32 weist einen Türausschnitt 78 für eine Seitentür 80 (Fig.4a) auf, von der in den Fig.1a bis 3 lediglich eine Türinnenschale 82 dargestellt ist. Die den Türausschnitt 78 abdeckende Türinnenschale 82 ist außenseitig parallel zur Seitenwand 32 angeordnet und weist eine größere Fläche als die des Türausschnittes 78 auf. Dadurch ist zwischen der Innenseite der Türinnenschale 82 und der zugeordneten Seitenwand 32 eine etwa U-förmige Anlagefläche geschaffen, in deren Bereich eine nicht dargestellte Dichtung angeordnet ist.

Zwischen der Stirnwand 14 und der Hecktrennwand 52 ist ein in den Fig.1b und 2erkennbarer Tunnel 84 angeordnet, der am Boden 10 und an den beiden Wänden 14,52 befestigt ist. Der Tunnel 84 umfaßt zwei in Fahrzeughochrichtung und einen etwa horizontal verlaufenden Plattenabschnitt in Leichtbauweise, die ein- oder mehrstückig ausgebildet sind. Dabei kann die Stirn- und oder Hecktrennwand 14,52 im Bereich des Tunnels 84 ausgeschnitten sein, z.B. wenn der Tunnel 84 als Kardantunnel dient.

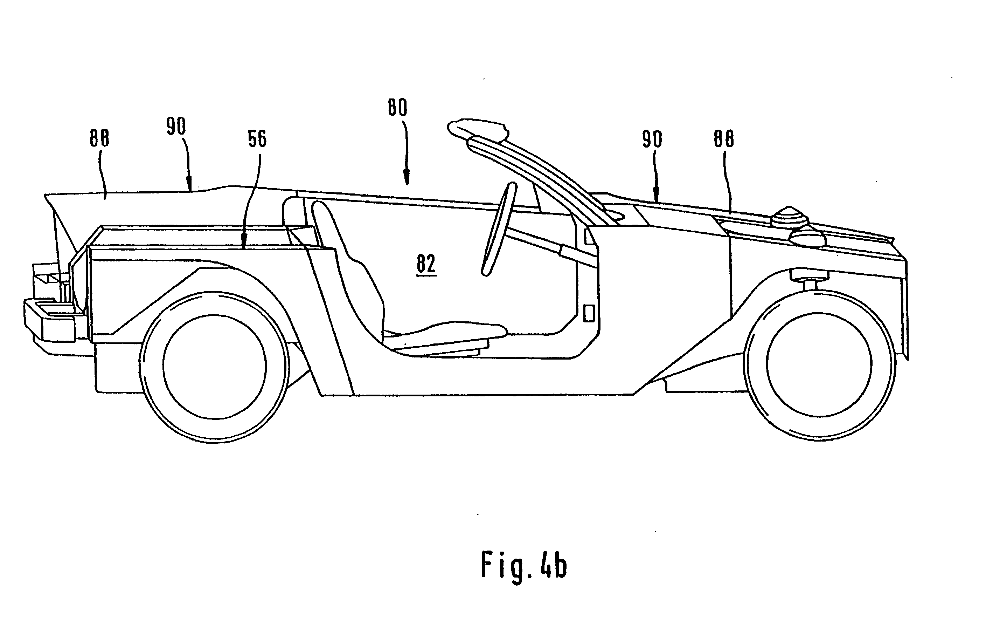

Die Fig.4a und 4b zeigen in Perspektiv- bzw. in Seitenansicht eine teilweise beplankte Tragstruktur, an der A-Säulen 86 eines Rahmens der Windschutzscheibe befestigt sind. Die Tragstruktur ist dabei insgesamt unter der Verkleidung angeordnet. An der rechten Seite der Tragstruktur sind den vorderen und hinteren Kotflügel bildende Verkleidungsteile 88 an entsprechenden Aufnahmen der Tragstruktur befestigt. Dabei ist insbesondere in Fig.4b erkennbar, daß die Seitenwand 32 der Tragstruktur unterhalb der zugeordneten Bordwandoberkante 90 endet. Da die hier gezeigte Ausführungsform der Tragstruktur für einen Roadster mit im Heckraum versenkbarem Dach ausgebildet ist, endet die Oberseite der hinteren Längsträger 56 bzw. die Plattenanordnung 72 in einem relativ großen Abstand unterhalb der Bordwandoberkante 90 bzw. einer nicht dargestellten oberen Heckraumverkleidung.

Die Türinnenschalen 82 sind mit Türbeplankungen 92 verkleidet, die an die umgebenden Verkleidungsteile 88, hier insbesondere des zugeordneten vorderen und hinteren Kotflügels angepaßt sind. Das in Fig.4a gezeigte Frontmodul 42 umfaßt zusätzlich einen der Leichtbauplatte vorgeordneten unteren Querträger 94, der über zwei Längsschenkel 96 an der Leichtbauplatte bzw. an den Längsträgern 56 befestigt ist. Dabei können in die Längsschenkel 96 Crashboxen integriert sein, die der Energieabsorption bei einem Frontalaufprall dienen. Am hinteren Ende des Fahrzeugs ist ein gleichartiger Querträger 94 befestigt.

Weiter sind in Fig.4a und 4b im Bereich der vorderen Längsträger 34 durch die quer verlaufenden Plattenschenkel 38 durchragende Dämpferdome 98 erkennbar, die - vorzugsweise großflächig an den Längsträgern 34 abgestützt - Aufnahmen für Dämpfungsglieder bieten.

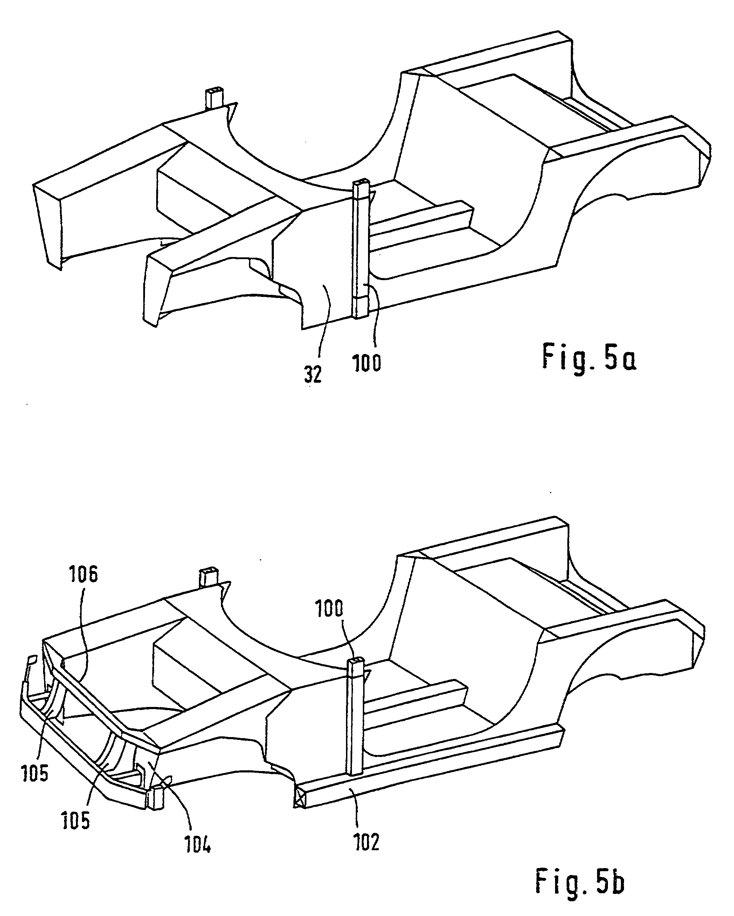

In Fig.5a ist an der Tragstruktur außenseitig der seitlichen Stützkastenwände 30 jeweils eine etwa vertikal verlaufende Aufnahme 100 mit einem etwa kastenförmigen Querschnitt befestigt, in welche die A-Säulen 86 einsteckbar und festlegbar sind. Die Aufnahmen 100 sind dabei vorzugsweise großflächig an der Tragstruktur befestigt und erstrecken sich über die nahezu gesamte Höhe der Seitenwände 32. Die Seitentüren 80 sind vorzugsweise über Scharniere 126 (Fig.1a an den Aufnahmen 100 angelenkt. Wie in Fig.5b erkennbar, ist jeweils unterhalb der Seitentür 80 eine sich in Fahrzeuglängsrichtung erstreckende und die Aufnahme 100 überdeckende Rammschutzeinrichtung 102 befestigt, die vorzugsweise etwa kastenförmig nach Art eines Schwellers insbesondere in Sandwichbauweise ausgebildet ist. Das Frontmodul 42 umfaßt hier zwei schmale, am jeweils zugeordneten vorderen Längsträger 34 befestigte vertikale Platten 104, die auf die Breite der Längsträger 34 angepaßt sind. Etwa am unteren Ende der Platten 104 ist der bereits unter Bezugnahme von Fig.4a beschriebene Querträger 94 über die Längsschenkel 96 fest angeordnet. Der Querträger 94 ist Teil einer Rahmenkonstruktion, die neben dem unteren Querträger 94 am oberen Ende der Platten 104 eine die Längsträger 34 fest verbindende Kühlerbrücke 106 aufweist, wobei der Querträger 94 und die Kühlerbrücke 106 über zwei vertikale Rahmenprofile 105 miteinander fest verbunden sind.

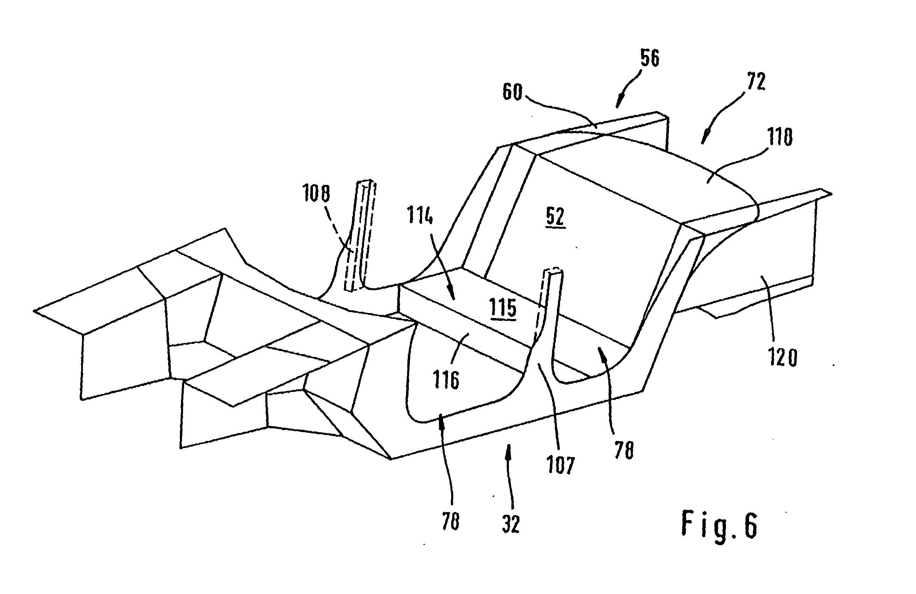

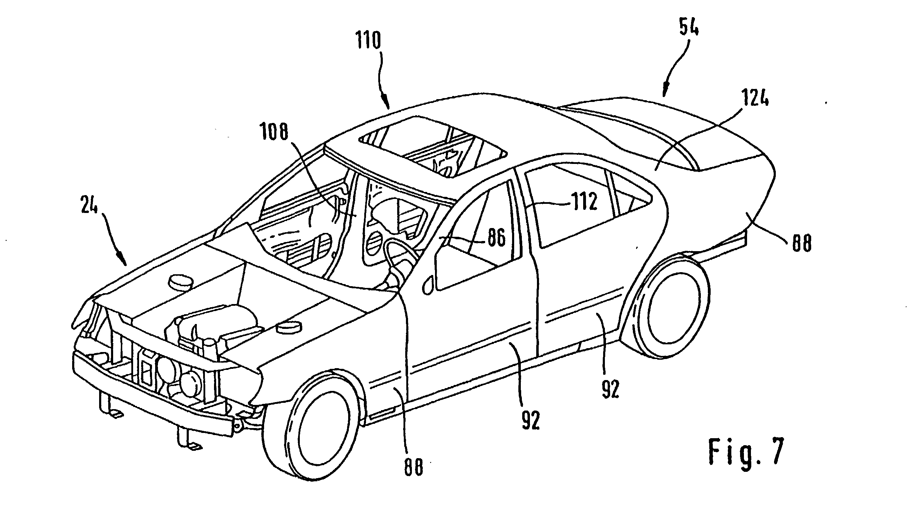

Fig.6 zeigt in Perspektivansicht von schräg vorne eine Tragstruktur für eine viertürige Limousine. Im Unterschied zu der Tragstruktur für den Roadster sind in den Seitenwänden 32 jeweils zwei Türausschnitte 78 vorgesehen. Zwischen den benachbarten Türausschnitten 78 ist jeweils ein Zwischenabschnitt 107 für eine Aufnahme 108 einer nicht dargestellten B-Säule 112 der Dachkonstruktion 110 (Fig.7) vorgesehen, die einteilig mit der Seitenwand 32 ausgebildet ist und sich etwa bis auf Höhe der Stirnwand 32 und der Hecktrennwand 52 erstreckt. Natürlich wäre es auch denkbar, die Zwischenabschnitte 107 aus einer separaten Platte herzustellen und mit der zugeordneten Seitenwand 32 zu verbinden. Die Dachkonstruktion 110 wirkt versteifend auf die Tragstruktur. Vor der Hecktrennwand 32 ist eine weitere Plattenanordnung 114 in Leichtbauweise vorgesehen, deren Plattenabschnitte 115,116 mit dem hinteren Ende der Bodens 10 und dem unteren Ende der Hecktrennwand 52 einen Kasten bilden, der stirnseitig an der jeweiligen Seitenwand 32 befestigt ist. Die Hecktrennwand 52 endet hier etwa auf Höhe der quer verlaufenden Plattenschenkel 60 der hinteren Längsträger 56. Die Plattenanordnung 72 zwischen den hinteren Längsträgern 56 umfaßt hier eine Platte 118 unterhalb der Hutablage und einen Kofferraumboden 120, der sich zwischen der Hecktrennwand 52 und der Rückwand 64 in einem Abstand parallel unterhalb der Hutablageplatte 118 erstreckt. In diesem Zusammenhang wäre es auch denkbar, die Hecktrennwand 52 mit Ausschnitten zu versehen, um eine Durchlademöglichkeit zwischen Kofferraum 122 und Innenraum zu schaffen. Gleichfalls wäre es denkbar, z.B. bei einem Kombinationskraftwagen auf einen oberen Teil der Hecktrennwand 52 und auf die Hutablageplatte 118 zu verzichten, um einen vergrößerten Laderaum zu schaffen. An den Seitenwänden 32 sind im Bereich der Hecktrennwand 52 nicht dargestellte Aufnahmen für C-Säulen 124 (Fig.7) der Dachkonstruktion 110 festgelegt, die nach Art der Aufnahmen 100,108 für die A- oder B-Säulen 86,112 ausgebildet sein können.

In Fig.7 ist die teilweise mit Verkleidungsteilen 88,92 beplankte Tragstruktur nach Fig.6 gezeigt, an der die Dachkonstruktion 110 befestigt ist. Die Dachkonstruktion ist u.a. über die Säulen 86,112,124 und die zugeordneten Aufnahmen 100,108 an der Tragstruktur befestigt. Dabei kann insbesondere das Fahrzeugdach ebenfalls aus einer Leichtbauplatte gebildet sein.

Zumindest die überwiegende Zahl der energieabsorbierenden und eigensteifen Leichtbauplatten, die vorzugsweise je nach Anforderung in Sandwichbauweise, mit Wabenstruktur, in Holz, in Aluminium, als Faserverbund, als Strangpreßprofil oder dgl. gefertigt sind, weisen eine ebene und einfache Gestalt auf. Um günstige Fertigungsbedingungen zu erreichen, können die einzelnen Plattenabschnitte sowohl einteilig als auch mehrteilig gefügt sein. Die einzelnen Plattenabschnitt sind insbesondere über Schweiß-, Niet, Klebe-, Steck-, Schraubverbindungen oder über Verbindungsadapter miteinander fest verbunden. Insbesondere können aus den Leichtbauplatten Module beispielsweise der Vorbaustruktur 24 oder der Heckstruktur 54 gefertigt werden, die anschließend miteinander fest verbunden werden können.

Im Falle eines Frontalunfalls weist die Tragstruktur vorzugsweise eine Deformationsreihenfolge auf, bei der zunächst das Frontmodul 42 mit dem Querträger 94 und den Crashboxen 96 deformiert wird. Bei einem stärkeren Aufprall wird dann die Vorbaustruktur 24 mit den vorderen Längsträgern 34 beaufschlagt, wobei die Sicherheitsfahrgastzelle auch bei starken Unfällen weitestgehend in ihrer Form erhalten bleibt. Die Deformationsreihenfolge kann beispielsweise durch die Verwendung unterschiedlicher Materialien oder verschiedener Plattendicken erreicht werden. Die vorderen Längsträger 34 können einen vorderen Abschnitt aufweisen, der bei einem Reparaturcrash relativ einfach ersetzbar ist. Gemäß der Vorbaustruktur 24 ist bevorzugt auch die Heckstruktur 54 ausgebildet.

Integralträger, Achsschemel, Agregate oder sonstige Fahrwerksglieder können über Aufnahmen, Schuhe der dgl. vorzugsweise großflächig an der Tragstruktur abgestützt werden.

## Patentansprüche

1. Tragstruktur für Kraftwagen mit einem tragenden Boden (10) in Leichtbauweise, der vorn im Fußraumbereich (12) in eine nach oben ragende Stirnwand (14) übergeht, und mit einer eine Knautschzone bildenden, seitliche Längsträger umfassenden Vorbaustruktur (24), die im Bereich der Stirnwand (14) abgestützt ist und in Fahrzeughochrichtung und in Fahrzeugquerrichtung verlaufende Leichtbauplatten umfaßt,
**dadurch gekennzeichnet,**
**daß** der Fußraumbereich (12) seitlich und oben von einer Plattenanordnung (20) aus eigensteifen, ebenen Leichtbauplatten (26,28,30) begrenzt ist, wobei die Leichtbauplatten (26,28,30) gemeinsam mit dem Boden (10) und der Stirnwand (14) einen Stützkasten (22) für die Vorbaustruktur (24) bilden.

2. Tragstruktur nach Anspruch 1,
**dadurch gekennzeichnet,**
**daß** sich die Stirnwand (14) annähernd über die gesamte Breite des Bodens (10) erstreckt.

3. Tragstruktur nach einem der Ansprüche 1 oder 2,
**dadurch gekennzeichnet,**
**daß** die Stirnwand (14) einen Übergangsbereich (16) umfaßt, der ausgehend vom Boden (10) schräg nach vorn oben gerichtet ist.

4. Tragstruktur nach einem der Ansprüche 1 bis 3,
**dadurch gekennzeichnet,**
**daß** die Vorbaustruktur (24) zwei Längsträger (34) umfaßt, die jeweils einen abgewinkelten Querschnitt aufweisen.

5. Tragstruktur nach Anspruch 4,
**dadurch gekennzeichnet,**
**daß** jeweils ein etwa vertikaler Plattenschenkel (36) der vorderen Längsträger (34) gegenüber der zugeordneten seitlichen Stützkastenwand (30) seitlich nach innen versetzt angeordnet ist.

6. Tragstruktur nach einem der Ansprüche 4 oder 5,
**dadurch gekennzeichnet,**
**daß** sich die vertikalen Plattenschenkel (36) der vorderen Längsträger (34) zumindest im Bereich ihrer hinteren Enden wenigstens über die halbe Höhe der Stirnwand (14) erstrecken.

7. Tragstruktur nach einem der Ansprüche 4 bis 6,
**dadurch gekennzeichnet,**
**daß** die hinteren Enden der vertikalen Plattenschenkel (36) über die annähernd gesamte Höhe der Stirnwand (14) am Stützkasten (22) abstützt sind.

8. Tragstruktur nach einem der Ansprüche 4 bis 7,
**dadurch gekennzeichnet,**
**daß** jeweils ein quer verlaufender Plattenschenkel (38) der vorderen Längsträger (34) über etwa einem rechten Winkel seitlich vom zugehörigen vertikalen Plattenschenkel (36) nach außen abragt.

9. Tragstruktur nach einem der Ansprüche 4 bis 8,
**dadurch gekennzeichnet,**
**daß** die quer verlaufenden Plattenschenkel (38) der vorderen Längsträger (34) etwa auf Höhe einer oberen Leichtbauplatte (26) des Stützkastens (22) an diesen anschließen und sich bis zu den zugehörigen Seitenwänden (32) des Stützkastens (22) erstrecken, wobei die Oberseite (35) der Längsträger (34) über ihre Länge nach vorn unten geneigt ist.

10. Tragstruktur nach einem der Ansprüche 4 bis 9,
**dadurch gekennzeichnet,**
**daß** am vorderen Ende der Längsträger (34) ein Frontmodul (42) befestigt ist.

11. Tragstruktur nach Anspruch 10,
**dadurch gekennzeichnet,**
**daß** das Frontmodul (42) eine Leichtbauplatte ist.

12. Tragstruktur nach Anspruch 10,
**dadurch gekennzeichnet,**
**daß** das Frontmodul (42) eine Rahmenkonstruktion mit einem oberen und unteren Querträger (106,94) umfaßt, wobei der obere Querträger (106) etwa auf Höhe der Oberkante der vorderen Längsträgerenden und der untere Querträgern (94) im unteren Bereich der Längsträgerenden angeordnet ist.

13. Tragstruktur nach einem der Ansprüche 4 bis 12,
**dadurch gekennzeichnet,**
**daß** sich die den Fußraumbereich (12) nach oben begrenzende Plattenanordnung (20) von der Stirnwand (14) des Stützkastens (22) bis zur Instrumententafel erstreckt, wobei zumindest eine vordere obere Leichtbauplatte (26) der Plattenanordnung (20) und die quer verlaufenden Plattenschenkeln (38) der Längsträger (34) aus einer Leichtbauplatte bestehen.

14. Tragstruktur nach einem der Ansprüche 1 bis 13,
**dadurch gekennzeichnet,**
**daß** die seitlichen Stützkastenwände (30) jeweils einen Wandbereich einer Seitenwand (32) der Tragstruktur bilden, wobei sich die Seitenwand (32) zumindest von der Stirnwand (14) bis zum hinteren Ende des Bodens (10) erstreckt.

15. Tragstruktur nach Anspruch 14,
**dadurch gekennzeichnet,**
**daß** die Seitenwand (32) in einem Abstand unterhalb der Bordwandoberkante (90) endet.

16. Tragstruktur nach einem der Ansprüche 14 oder 15,
**dadurch gekennzeichnet,**
**daß** die Seitenwand (32) aus einer Leichtbauplatte besteht und mindestens einen Türausschnitt (78) aufweist.

17. Tragstruktur nach einem der Ansprüche 14 bis 16,
**dadurch gekennzeichnet,**
**daß** die Seitenwand (32) bis zum Frontmodul (42) nach vorne verlängert und mit einem Radausschnitt (47) versehen ist.

18. Tragstruktur nach einem der Ansprüche 1 bis 17,
**dadurch gekennzeichnet,**
**daß** der Boden (10) hinten in eine nach oben ragende Hecktrennwand (52) übergeht, die aus einer Leichtbauplatte hergestellt ist.

19. Tragstruktur nach Anspruch 18,
**dadurch gekennzeichnet,**
**daß** sich die Hecktrennwand (52) annähernd über die gesamte Breite des Bodens (10) erstreckt.

20. Tragstruktur nach einem der Ansprüche 18 oder 19,
**dadurch gekennzeichnet,**
**daß** die Hecktrennwand (52) schräg nach hinten oben geneigt ist.

21. Tragstruktur nach einem der Ansprüche 1 bis 20,
**dadurch gekennzeichnet,**
**daß** die Tragstruktur eine Heckstruktur (54) mit hinteren Längsträgern (56) aus Leichtbauplatten umfaßt, die jeweils einen in Fahrzeughochrichtung und einen in Fahrzeugquerrichtung abgewinkelten Plattenschenkel (58,60) aufweisen.

22. Tragstruktur nach Anspruch 21,
**dadurch gekennzeichnet,**
**daß** jeweils der vertikale Plattenschenkel (58) der hinteren Längsträger (56) gegenüber der zugeordneten Seitenwand (32) nach innen versetzt angeordnet ist.

23. Tragstruktur nach einem der Ansprüche 21 oder 22,
**dadurch gekennzeichnet,**
**daß** sich die vertikalen Plattenschenkel (58)der hinteren Längsträger (56) zumindest im Bereich ihrer vorderen Enden wenigstens über die halbe Höhe der Hecktrennwand (52) erstrecken.

24. Tragstruktur nach einem der Ansprüche 21 bis 23,
**dadurch gekennzeichnet,**
**daß** die vorderen Enden der vertikalen Plattenschenkel (58) über die annähernd gesamte Höhe der Hecktrennwand (52) an dieser abgestützt sind.

25. Tragstruktur nach einem der Ansprüche 21 bis 24,
**dadurch gekennzeichnet,**
**daß** die quer verlaufenden Plattenschenkel (60) der hinteren Längsträger (56) über etwa einem rechten Winkel seitlich vom zugehörigen vertikalen Plattenschenkel (58) nach außen abragen.

26. Tragstruktur nach einem der Ansprüche 21 bis 25,
**dadurch gekennzeichnet,**
**daß** sich die Seitenwände (32) über die gesamte Länge der Heckstruktur (54) erstrecken und mit einem Radausschnitt (68) versehen sind.

27. Tragstruktur nach einem der Ansprüche 21 bis 26,
**dadurch gekennzeichnet,**
**daß** die hinteren Längsträger (56) an ihrem hinteren Ende mit einer in Fahrzeugquerrichtung verlaufenden Rückwand (64) fest verbunden sind, aus der ein Ausschnitt (66) für eine Rückwandtür ausgespart ist.

28. Tragstruktur nach einem der Ansprüche 21 bis 27,
**dadurch gekennzeichnet,**
**daß** die vertikalen Plattenschenkel (58) der hinteren Längsträger (56) über eine Plattenanordnung (72) aus Leichtbauplatten zu einem Kasten miteinander verbunden sind.

29. Tragstruktur nach Anspruch 28,
**dadurch gekennzeichnet,**
**daß** die Plattenanordnung (72) einen etwa horizontalen Plattenabschnitt (74) und daran anschließend einen hinteren Plattenabschnitt (76) in Leichtbauweise umfaßt, der schräg nach hinten unten geneigt ist.

30. Tragstruktur nach einem der Ansprüche 18 bis 29,
**dadurch gekennzeichnet,**
**daß** zwischen der Stirnwand (14) und der Hecktrennwand (52) ein am Boden (10) befestigter Tunnel (84) vorgesehen ist.

31. Tragstruktur nach Anspruch 16,
**dadurch gekennzeichnet,**
**daß** dem Türausschnitt (78) eine Seitentür (80) zugeordnet ist, bei der zumindest die Türinnenschale (82) als zur Seitenwand (32) weitgehend parallele Leichtbauplatte ausgebildet ist.

32. Tragstruktur nach einem der Ansprüche 1 bis 31,
**dadurch gekennzeichnet,**
**daß** zumindest die überwiegende Anzahl der Leichtbauplatten als ebene Platten gestaltet sind.

33. Tragstruktur nach einem der Ansprüche 1 bis 32,
**dadurch gekennzeichnet,**
**daß** mindestens der Boden (10) der Tragstruktur aus einem einstückigen oder mehreren zusammengesetzten Strangpreßprofilen gefertigt ist.

34. Tragstruktur nach einem der Ansprüche 1 bis 33,
**dadurch gekennzeichnet,**
**daß** die Tragstruktur des Fahrzeugs zur Beplankung mit Verkleidungsteilen (88) vorgesehen ist.

35. Tragstruktur nach einem der Ansprüche 1 bis 34,
**dadurch gekennzeichnet,**
**daß** die Türen (80) des Fahrzeugs mit Türbeplankungen (92) ausgestattet sind, die an die umgebenden Verkleidungsteile (88) angepaßt sind.

36. Tragstruktur nach einem der Ansprüche 1 bis 35,
**dadurch gekennzeichnet,**
**daß** an den Seitenwänden (32) im Bereich des Stützkastens (22) Aufnahmen (100) vorgesehen sind, mit denen A-Säulen (86) einer Dachkonstruktion (110) an der Tragstruktur befestigbar sind.

37. Tragstruktur nach einem der Ansprüche 1 bis 36,
**dadurch gekennzeichnet,**
**daß** an der Tragstruktur weitere Aufnahmen (108) vorgesehen sind, mit denen weitere Säulen (112,124) einer Dachkonstruktion (110) an der Tragstruktur befestigbar sind.

38. Tragstruktur nach einem der Ansprüche 36 oder 37,
**dadurch gekennzeichnet,**
**daß** die Aufnahmen (100,108) großflächig an der Tragstruktur befestigt sind und sich nahezu über die gesamte Höhe der Seitenwände (32) erstrecken.

39. Tragstruktur nach einem der Ansprüche 36 bis 38,
**dadurch gekennzeichnet,**
**daß** die Türen (80) an den Aufnahmen (100) angelenkt sind.

40. Tragstruktur nach einem der Ansprüche 1 bis 39,
**dadurch gekennzeichnet,**
**daß** die Tragstruktur unterhalb der Türausschnitte (78) mit einer Rammschutzeinrichtung (102) versehen ist.

## Claims

1. A supporting structure for vehicles with a supporting floor (10) in a light-weight design which changes into an upward projecting bulkhead (14) at the front in the footwell area (12), and with a front-end structure (24) comprising lateral longitudinal members and forming a crash crumple zone which is supported in the area of the bulkhead (14) and comprises light-weight panels which run vertically and transversely in relation to the vehicle,
**characterised in that**
the footwell (12) area is delimited to the side and above by an arrangement of panels (20) made of self-rigid, flat light-weight panels (26, 28, 30), the light-weight panels (26, 28, 30) together with the floor (10) and the bulkhead (14) forming a supporting box (22) for the front-end structure (24).

2. A supporting structure in accordance with claim 1,
**characterised in that**
the bulkhead (14) extends over almost the entire width of the floor (10).

3. A supporting structure in accordance with one of claims 1 or 2,
**characterised in that**
the bulkhead (14) comprises a transitional area (16) which is angled forwards and upwards from the floor (10).

4. A supporting structure in accordance with one of claims 1 to 3,
**characterised in that**
the front-end structure (24) comprises two longitudinal members (34) both of which have an angled cross section.

5. A supporting structure in accordance with claim 4,
**characterised in that**
one roughly vertical panel leg (36) of the front longitudinal members (34) is positioned laterally offset to the inside in relation to the associated lateral supporting box wall (30).

6. A supporting structure in accordance with one of claims 4 or 5,
**characterised in that**
in the area of their rear ends at least, the vertical panel legs (36) of the front longitudinal members (34) extend over at least half the height of the bulkhead (14).

7. A supporting structure in accordance with one of claims 4 to 6,
**characterised in that**
the rear ends of the vertical panel legs (36) are supported on the supporting box (22) over almost the full height of the bulkhead (14).

8. A supporting structure in accordance with one of claims 4 to 7,
**characterised in that**
one of the transverse running panel legs (38) of the front longitudinal members (34) project laterally outwards at approximately right angles from the associated vertical panel leg (36).

9. A supporting structure in accordance with one of claims 4 to 8,
**characterised in that**
the transverse running panel legs (38) of the front longitudinal members (34) connect with the supporting box (22) at the height of an upper light-weight panel (26) of said supporting box (22) and extend as far as the associated lateral walls (32) of the supporting box (22), the upper face (35) of the longitudinal members (34) being angled longitudinally forwards and downwards.

10. A supporting structure in accordance with one of claims 4 to 9,
**characterised in that**
a front module (42) is fixed to the front end of the longitudinal members (34).

11. A supporting structure in accordance with claim 10,
**characterised in that**
the front module (42) is a light-weight panel.

12. A supporting structure in accordance with claim 10,
**characterised in that**
the front module (42) comprises a frame construction with an upper and a lower cross member (106, 94), the upper cross-member (106) being positioned at approximately the height of the upper edge of the front ends of the longitudinal members and the lower cross member (94) being positioned in the lower area of the ends of the longitudinal members.

13. A supporting structure in accordance with one of claims 4 to 12,
**characterised in that**
the panel arrangement which delimits the footwell area (12) above extends from the bulkhead (14) of the supporting box (22) as far as the instrument panel, at least one front upper light-weight panel (26) of the panel arrangement (20) and the transverse running panel legs (38) of the longitudinal members (34) consisting of one light-weight panel.

14. A supporting structure in accordance with one of claims I to 13,
**characterised in that**
the lateral supporting box walls (30) each form a wall area of a lateral wall (32) of the supporting structure, the lateral wall (32) extending at least from the bulkhead (14) to the rear end of the floor (10).

15. A supporting structure in accordance with claim 14,
**characterised in that**
the lateral wall (32) ends at a distance below the rim wall upper edge (90).

16. A supporting structure in accordance with one of claims 14 or 15,
**characterised in that**
the lateral wall (32) consists of a light-weight panel and has at least one door cut-out (78).

17. A supporting structure in accordance with one of claims 14 to 16,
**characterised in that**
the lateral wall (32) extends forwards as far as the front module (42) and is provided with a wheel cut-out (47).

18. A supporting structure in accordance with one of claims 1 to 7,
**characterised in that**
at the rear the floor (10) changes into an upward projecting rear dividing wall (52) which is made of a light-weight panel.

19. A supporting structure in accordance with claim 18,
**characterised in that**
the rear dividing wall (52) extends over almost the entire width of the floor (10).

20. A supporting structure in accordance with one of claims 18 or 19,
**characterised in that**
the rear dividing wall (52) is angled rearwards and upwards.

21. A supporting structure in accordance with one of claims 1 to 20,
**characterised in that**
the supporting structure comprises a rear structure (54) with rear longitudinal members (56) made of light-weight panels each of which has one panel leg (58) angled vertically and one panel leg (60) angled transversely in relation to the vehicle.

22. A supporting structure in accordance with claim 21,
**characterised in that**
the vertical panel leg (58) of the rear longitudinal members (56) is positioned offset to the inside in relation to the associated lateral wall (32).

23. A supporting structure in accordance with claim 21 or 22,
**characterised in that**
in the area of their front ends at least, the vertical panel legs (58) of the rear longitudinal members (56) extend over at least half the height of the rear dividing wall (52).

24. A supporting structure in accordance with claims 21 to 23,
**characterised in that**
the front ends of the vertical panel legs (58) are supported on the rear dividing wall (52) over almost its entire height.

25. A supporting structure in accordance with claim 21 to 24,
**characterised in that**
the transverse running panel legs (60) of the rear longitudinal members (56) project laterally outwards at approximately right angles from the associated vertical panel legs (58).

26. A supporting structure in accordance with claim 21 to 25,
**characterised in that**
the lateral walls (32) extend along the entire length of the rear structure (54) and are provided with a wheel cut-out (68).

27. A supporting structure in accordance with claim 21 to 26,
**characterised in that**
the rear ends of the rear longitudinal members (56) are rigidly connected to a rear panel (64) which runs transversely in relation to the vehicle and in which a cut-out (66) for a rear panel door is left open.

28. A supporting structure in accordance with claim 21 to 27,
**characterised in that**
the vertical panel legs (58) of the rear longitudinal members (56) are connected together with a box via a panel arrangement (72) made of light-weight panels.

29. A supporting structure in accordance with claim 28,
**characterised in that**
the panel arrangement (72) comprises an approximately horizontal panel section (74) and adjacent thereto a rear panel section (76) of light-weight design which is angled rearwards and upwards.

30. A supporting structure in accordance with one of claims 18 to 29,
**characterised in that**
a tunnel (84) which is fixed to the floor (10) is provided between the bulkhead (14) and the rear dividing wall (52).

31. A supporting structure in accordance with claim 16,
**characterised in that**
a side door (8), of which at least the inner shell (82) is designed as a light-weight panel largely parallel to the lateral wall (32), is associated with the door cut-out (78).

32. A supporting structure in accordance with one of claims 1 to 31,
**characterised in that**
the light-weight panels are at least predominantly designed as flat panels.

33. A supporting structure in accordance with one of claims I to 32,
**characterised in that**
at least the floor (10) of the supporting structure is made of one single-piece extruded section or several composite extruded sections.

34. A supporting structure in accordance with one of claims 1 to 33,
**characterised in that**
the supporting structure of the vehicle is provided with panel sections (88) for cladding.

35. A supporting structure in accordance with one of claims 1 to 34,
**characterised in that**
the doors (80) of the vehicle are fitted with door cladding panels (92) which are adapted to the surrounding panel sections (88).

36. A supporting structure in accordance with one of claims 1 to 35,
**characterised in that**
receivers (100) are provided on the lateral walls (32) in the area of the supporting box (22) by means of which A-pillars (86) of a roof construction (110) can be fastened to the supporting structure.

37. A supporting structure in accordance with one of claims 1 to 36,
**characterised in that**
further receivers (108) are provided on the supporting structure with which further pillars (112, 124) of a roof construction (110) can be fastened to the supporting structure.

38. A supporting structure in accordance with one of claims 36 or 37,
**characterised in that**
the receivers (100, 108) are fastened to the supporting structure by means of large surface areas and extend over almost the total height of the lateral walls (32).

39. A supporting structure in accordance with one of claims 36 to 38,
**characterised in that**
the doors (80) are linked to the receivers (100).

40. A supporting structure in accordance with one of claims 1 to 39,
**characterised in that**
the supporting structure is provided with a protective moulding (102) below the door cut-outs (78).

## Revendications

1. Structure de support pour des véhicules à moteur, avec un plancher (10) porteur en construction légère, se transformant à l'avant en une zone de place pour les jambes (12) et en une paroi frontale (14) montant vers le haut et avec une structure de bloc avant (24), formant une zone déformable, comprenant des longerons latéraux, structure de bloc avant soutenue dans la zone de la paroi frontale (14) et comprenant des plaques de construction légères s'étendant dans la direction de la hauteur du véhicule et dans la direction transversale du véhicule, **caractérisée en ce que** la zone de place pour les jambes (12) est délimitée latéralement et en partie haute par un agencement de plaques (20) formé de plaques en construction légère (26, 28, 30) planes ayant une rigidité propre, les plaques en construction légère (26, 28, 30) formant, conjointement avec le plancher (10) et la paroi frontale (14), un caisson d'appui (22) pour la structure à bloc avant (24).

2. Structure de support selon la revendication 1, **caractérisée en ce que** la paroi frontale (14) s'étend à peu près sur toute la largeur du plancher (10).

3. Structure de support selon l'une des revendications 1 ou 2, **caractérisée en ce que** la paroi frontale (14) comprend une zone de transition (16), orientée obliquement vers le haut et l'avant en partant du plancher (10).

4. Structure de support selon l'une des revendications 1 à 3, **caractérisée en ce que** la structure de bloc avant (24) comprend deux longerons (34) présentant chacun une section transversale coudée.

5. Structure de support selon la revendication 4, **caractérisée en ce que** chaque fois une branche de plaque (36) à peu près verticale des longerons avant (34) est disposée de façon décalée latéralement vers l'intérieur par rapport à la paroi de caisson d'appui (30) latérale associée.

6. Structure de support selon l'une des revendications 4 ou 5, **caractérisée en ce que** les branches de plaque (36) verticales des longerons avant (34) s'étendent, au moins sur la moitié de la hauteur de la paroi frontale (14), au moins dans la zone de leurs extrémités arrière.

7. Structure de support selon l'une des revendications 4 à 6, **caractérisée en ce que** les extrémités arrière des branches de plaque (36) verticales sont soutenues sur le caisson d'appui (22), sur à peu près toute la hauteur de la paroi frontale (14).

8. Structure de support selon l'une des revendications 4 à 7, **caractérisée en ce que** chaque fois une branche de plaque (36), s'étendant transversalement des longerons avant (34), fait saillie vers l'extérieur par rapport à la banche de plaques (36) verticale afférente, latéralement, selon à peu près un angle droit.

9. Structure de support selon l'une des revendications 4 à 8, **caractérisée en ce que** les branches de plaque (38), s'étendant transversalement, des longerons avant (34) se raccordent à ceux-ci à peu près, au niveau d'une plaque en construction légère (26) supérieure du caisson d'appui (22), et s'étendent jusqu'aux parois latérales (32) afférentes du caisson d'appui (22), la face supérieure (35) des longerons (34) étant inclinée vers l'avant et le bas sur sa longueur.

10. Structure de support selon l'une des revendications 4 à 9, **caractérisée en ce qu'**un module avant (42) est fixé sur l'extrémité avant des longerons (34).

11. Structure de support selon la revendication 10, **caractérisée en ce que** le module avant (42) est une plaque de construction légère.

12. Structure de support selon la revendication 10, **caractérisée en ce que** le module avant (42) comprend une construction en cadre avec une traverse supérieure et une traverse inférieure (106, 94), la traverse supérieure (106) étant disposée à peu près au niveau de l'arête supérieure des extrémités avant de longerons et la traverse inférieure (94) étant disposée dans la zone inférieure des extrémités de longerons.

13. Structure de support selon l'une des revendications 4 à 12, **caractérisée en ce que** l'agencement de plaques (20), délimitant vers le haut la zone d'espace pour les jambes (12), s'étend de la paroi frontale (14) du caisson d'appui (22) jusqu'au tableau de bord, sachant qu'au moins une plaque de construction légère (26) supérieure avant de l'agencement de plaques (20) et les branches de plaque (36), s'étendant transversalement, des longerons (34) sont formées d'une plaque en construction légère.

14. Structure de support selon l'une des revendications 1 à 13, **caractérisée en ce que** les parois latérales (30) de caisson d'appui forment chacune une zone de paroi d'une paroi latérale (32) de la structure de support, la paroi latérale (32) s'étendant au moins de la paroi frontale (14) jusqu'à l'extrémité arrière du plancher (10).

15. Structure de support selon la revendication 14, **caractérisée en ce que** la paroi latérale (32) s'achève à distance au-dessous du bord supérieur de paroi de bord (90).

16. Structure de support selon l'une des revendications 14 ou 15, **caractérisée en ce que** la paroi latérale (32) est formée d'une plaque en construction légère et présente au moins une découpure de porte (78).

17. Structure de support Belon l'une des revendications 14 à 16, **caractérisée en ce que** la paroi latérale (32) est prolongée vers l'avant jusqu'au module avant (42) et est munie d'une découpure de roue (47).

18. Structure de support selon l'une des revendications 1 à 17, **caractérisée en ce que** le plancher (10) se transforme à l'arrière en une paroi de séparation arrière (52) faisant saillie vers le haut, produite à partir d'une plaque de construction légère.

19. Structure de support selon la revendication 18, **caractérisée en ce que** la paroi de séparation arrière (52) s'étend à peu près sur l'ensemble de la largeur du plancher (10).

20. Structure de support selon l'une des revendications 18 ou 19, **caractérisée en ce que** la paroi de séparation arrière (52) est inclinée obliquement vers le haut et l'arrière.

21. Structure de support selon l'une des revendications 1 à 20, **caractérisée en ce que** la structure de support comprend une structure arrière (54) avec des longerons arrière (56) formés de plaques de construction légère, présentant chacune une branche de plaque (58, 60), orientée dans la direction verticale du véhicule, et une autre, coudée dans la direction transversale du véhicule.

22. Structure de support selon la revendication 21, **caractérisée en ce que** chaque fois la branche de plaque verticale (58) des longerons arrière (56) est décalée vers l'intérieur par rapport à la paroi latérale (32) associée.

23. Structure de support selon l'une des revendications 21 ou 22, **caractérisée en ce que** les branches de plaque (58) verticales des longerons arrière (56) s'étendent, au moins dans la zone de leurs extrémités avant, au moins sur la demi-hauteur de la paroi de séparation arrière (52).

24. Structure de support selon l'une des revendications 21 à 23, **caractérisée en ce que** les extrémités avant des branches de plaque verticales (58) sont soutenues sur à peu près la totalité de la hauteur de la paroi de séparation arrière (52), sur celle-ci.

25. Structure de support selon l'une des revendications 21 à 24, **caractérisée en ce que** les branches de plaque (60), s'étendant transversalement, des longerons arrière (56) font saillie vers l'extérieur à peu près sur un angle droit, latéralement, depuis la branche de plaque (58) verticale afférente.

26. Structure de support selon l'une des revendications 21 à 25, **caractérisée en ce que** les parois latérales (32) s'étendent sur toute la longueur de la structure arrière (54) et sont munies d'une découpure de roue (68).

27. Structure de support selon l'une des revendications 21 à 26, **caractérisée en ce que** les longerons arrière (56) sont reliés rigidement, à leur extrémité arrière, à une paroi arrière (64) s'étendant dans la direction transversale du véhicule, d'où une découpure (66) est ménagée pour une porte de paroi arrière.

28. Structure de support selon l'une des revendications 21 à 27, **caractérisée en ce que** les branches de plaque (58) verticales des longerons arrière (56) sont reliées ensemble par l'intermédiaire d'un agencement à plaques (72) formé de plaques en construction légère, pour former un caisson.

29. Structure de support selon la revendication 28, **caractérisée en ce que** l'agencement à plaques (72) comprend un tronçon de plaque (74) à peu près horizontal et, s'y raccordant, un tronçon de plaque arrière (76) réalisé en construction légère, incliné obliquement vers le bas et l'arrière.

30. Structure de support selon l'une des revendications 18 à 29, **caractérisée en ce qu'**un tunnel (84), fixé au plancher (10), est prévu entre la paroi frontale (14) et la paroi de séparation arrière (52).

31. Structure de support selon la revendication 16, **caractérisée en ce qu'**une porte latérale (80) est associée à la découpure de porte (78), porte pour laquelle au moins la coque intérieure de porte (82) est réalisée sous la forme de plaque en construction légère largement parallèle à la paroi latérale (32).

32. Structure de support selon l'une des revendications 1 à 31, **caractérisée en ce qu'**au moins la majeure partie de la pluralité des plaques en construction légère sont formées en plaques planes.

33. Structure de support selon l'une des revendications 1 à 32, **caractérisée en ce qu'**au moins le plancher (10) de la structure de support est fabriqué à partir de profilés d'extrusion d'une seule pièce, ou bien de plusieurs profilés d'extrusion assemblés.

34. Structure de support selon l'une des revendications 1 à 33, **caractérisée en ce que** la structure de support du véhicule est prévue pour un panneautage avec des pièces d'habillage (88).

35. Structure de support selon l'une des revendications 1 à 34, **caractérisée en ce que** les portes (80) du véhicule sont munies de panneaux de porte (92) adaptés aux pièces d'habillage (88) environnantes.

36. Structure de support selon l'une des revendications 1 à 35, **caractérisée en ce que**, sur les parois latérales (32), dans la zone du caisson d'appui (22), sont prévus des logements (100) à l'aide desquels des colonnes A (86) d'une construction de toit (110) sont susceptibles d'être fixées sur la structure de support,

37. Structure de support selon l'une des revendications 1 à 36, **caractérisée en ce que**, sur la structure de support, sont prévus d'autres logements (108), à l'aide desquels d'autres colonnes (112, 114) d'une construction de toit (110) sont susceptibles d'être fixées sur la structure de support.

38. Structure de support selon l'une des revendications 36 ou 37, **caractérisée en ce que** les logements (100, 108) sont fixés sur une grande surface sur la structure de support et s'étendent à peu près sur toute la hauteur des parois latérales (32).

39. Structure de support selon l'une des revendications 36 à 38, **caractérisée en ce que** les portes (80) sont articulées sur les logements (100).

40. Structure de support selon l'une des revendications 1 à 39, **caractérisée en ce que** la structure de support est munie d'un dispositif de protection contre le battage (102), au-dessous des découpures de porte (78).
